(19) Europäisches Patentamt

European Patent Office

Office européen des brevets

(11) EP 1 493 623 A1

(12) DEMANDE DE BREVET EUROPEEN

(43) Date de publication:
05.01.2005 Bulletin 2005/01

(51) Int Cl.⁷: B60R 5/04, B60R 13/08

(21) Numéro de dépôt: 04291683.3

(22) Date de dépôt: 02.07.2004

(84) Etats contractants désignés:
AT BE BG CH CY CZ DE DK EE ES FI FR GB GR
HU IE IT LI LU MC NL PL PT RO SE SI SK TR
Etats d'extension désignés:
AL HR LT LV MK

(30) Priorité: 04.07.2003 FR 0308164

(71) Demandeur: Renault s.a.s.
92100 Boulogne Billancourt (FR)

(72) Inventeurs:
• Caron, Sébastien
78180 Montigny Le Bretonneux (FR)
• Girard, Philippe
95240 Cormeilles en Parisis (FR)
• Zhang, Charles
78280 Guyancourt (FR)

(54) **Cloison de séparation de deux compartiments interieurs d'un vehicule**

(57) Cloison (4) de séparation de deux compartiments intérieurs (2,3) d'un véhicule automobile (1) comportant un panneau rigide (20) qui est percé d'une pluralité de trous (28) débouchant dans chaque face et qui est revêtu, sur chaque face, d'au moins une couche de revêtement (22,24) perméable à des premières ondes sonores dont la fréquence est comprise dans un premier intervalle de fréquences, comportant également d'un côté du panneau (20) un film (26) perméable aux premières ondes et imperméable à des secondes ondes sonores dont la fréquence est comprise dans un deuxième intervalle de fréquences supérieures à celles du premier intervalle. Véhicule (1) comportant une telle cloison (4).

Fig. 1

# Description

La présente invention se rapporte à une cloison de séparation de deux compartiments intérieurs d'un véhicule automobile.

Dans certains véhicules, la tête d'un utilisateur est située dans une zone de l'habitacle dans laquelle des ondes sonores sont clairement perceptibles et dans laquelle le niveau sonore est inconfortable.

Certains véhicules sont équipés d'une cloison ou tablette arrière horizontale. Elle comporte un panneau rigide qui est percé d'une pluralité de trous débouchant dans chaque face et qui est revêtu, sur chaque face, d'au moins une couche de revêtement perméable à des premières ondes sonores dont la fréquence est comprise dans un premier intervalle de fréquences, telles que des ondes sonores inconfortables dont la fréquence est inférieure à 200 Hertz.

Une telle configuration de cloison trouée séparant un compartiment à bagages de l'habitacle occupé par des utilisateurs du véhicule permet d'améliorer le confort acoustique du véhicule en rendant moins perceptibles les ondes sonores inconfortables.

Le but de l'invention est d'améliorer encore le confort acoustique des utilisateurs d'un véhicule comportant une telle cloison de séparation.

Dans ce but, l'invention propose une cloison de séparation de deux compartiments intérieurs d'un véhicule automobile comportant un panneau rigide qui est percé d'une pluralité de trous débouchant dans chaque face et qui est revêtu, sur chaque face, d'au moins une couche de revêtement perméable à des premières ondes sonores dont la fréquence est comprise dans un premier intervalle de fréquences, caractérisée en ce qu'elle comporte d'un côté du panneau un film perméable aux premières ondes et imperméable à des secondes ondes sonores dont la fréquence est comprise dans un deuxième intervalle de fréquences supérieures à celles du premier intervalle.

Une onde sonore stationnaire dont le noeud et le ventre représentent respectivement l'amplitude minimale et maximale des pressions acoustiques dans l'habitacle correspond aux fréquences de résonance d'éléments du véhicule. La cloison selon l'invention a pour avantage de déplacer le ventre des premières ondes sonores, en particulier le ventre des ondes stationnaires, de l'habitacle vers le compartiment à bagages, tout en évitant d'accentuer dans l'habitacle l'amplitude des secondes ondes sonores. De plus la cloison selon l'invention présente une fréquence de résonance propre choisie en fonction des ondes sonores auxquelles elle est destinée à être soumise.

Une portion du film et des couches de revêtement peut s'étendre en regard d'une embouchure de chaque trou de manière à constituer une pluralité de résonateurs pour les deuxièmes ondes sonores.

Le film peut être placé entre une face du panneau et la couche de revêtement associée.

L'épaisseur du film peut être comprise entre 30 et 60 micromètres.

La section de passage de chaque trou est comprise entre 7 et 40 millimètres carrés.

L'épaisseur du panneau peut être comprise entre 2 et 5 millimètres.

La somme des sections de passage des trous est comprise entre 5 pour cent et 15 pour cent de l'aire totale du panneau.

Les trous peuvent être percés dans des régions planes du panneau.

Les couches de revêtement peuvent être réalisées en un matériau non tissé.

La couche de revêtement côté film peut être réalisée en un matériau comportant un feutre.

L'invention concerne aussi un véhicule comportant une cloison comme énoncé précédemment, dans lequel la cloison est une tablette sensiblement horizontale disposée entre l'habitacle et le compartiment à bagages du véhicule.

Le film peut être situé côté compartiment à bagages.

La présente invention va maintenant être décrite par un exemple de réalisation non limitatif, en liaison avec la planche de dessin annexée dans laquelle :

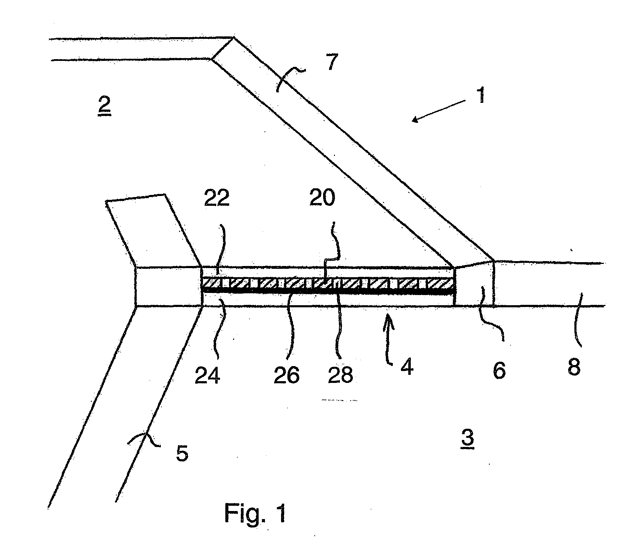

- la figure 1 est une vue schématique d'une portion de véhicule, une tablette de séparation de l'habitacle et du compartiment à bagages étant représentée en coupe.

Classiquement, l'intérieur d'un véhicule 1 comporte un habitacle 2 avec au moins un siège destiné à accueillir au moins un conducteur ou passager et un coffre ou compartiment arrière à bagages 3. Dans un tel intérieur de véhicule, des ondes sonores de différentes fréquences sont perceptibles, en particulier dans l'habitacle 2.

Dans la description qui va suivre, le terme basses fréquences désigne des fréquences inférieures à 200 Hertz. Le terme moyennes fréquences des fréquences dont la valeur est comprise entre 200 Hertz et 2000 Hertz. Le terme hautes fréquences désigne des fréquences supérieures à 2000 Hertz.

A l'intérieur du véhicule, les ondes sonores proviennent du châssis qui transmet les vibrations du groupe moto propulseur et des liaisons au sol. Elles proviennent de la carrosserie qui transmet lesdites vibrations et des bruits aérodynamiques. Elles proviennent aussi des éléments d'habillage de l'habitacle.

Les ondes sonores ont des fréquences différentes selon leur provenance. Par exemple, des ondes basses fréquences sont émises et produisent un bruit grave à cause des harmoniques de rang 2 dues aux vibrations d'un moteur diesel à quatre cylindres dont le régime de rotation est inférieur à 2000 tours par minute. Par exemple, des ondes hautes fréquences sont émises et produisent un bruit aigu à cause des décollements aérodynamiques des écoulements d'air sur la carrosserie et de l'écoulement des gaz en sortie de ligne d'échappement. Les trains roulant d'un véhicule transmettent typiquement des vibrations qui sont la source d'ondes sonores dans l'habitacle et dans le coffre. Dans ce cas, il s'agit typiquement d'ondes sonores basses fréquences perceptibles et inconfortables, surtout aux places arrière d'une berline comportant deux rangées de sièges. Des ondes sonores moyennes et hautes fréquences sont aussi émises dans le coffre, par exemple par la remontée de bruit de la ligne d'échappement.

Même si des habillages intérieurs isolent l'habitacle du compartiment à bagages, les ondes sonores du coffre sont audibles dans l'habitacle, au détriment du confort. Une onde stationnaire est particulièrement inconfortable pour un utilisateur quand sa tête est placée à un endroit de l'habitacle où l'amplitude de l'onde stationnaire est maximale.

Dans l'exemple de réalisation d'habitacle 2 représenté, un élément d'habillage intérieur, formé par une tablette arrière ou cloison de séparation 4, est placé entre l'habitacle 2 et le compartiment à bagages 3. La cloison 4 s'étend entre deux parois latérales longitudinales intérieures du véhicule 1, le haut d'une banquette arrière 5 de l'habitacle et la face intérieure de la traverse inférieure 6 de lunette arrière 7 du véhicule, dans le prolongement avant de la porte 8 de coffre.

La cloison 4 selon l'invention doit permettre d'isoler au mieux, en particulier du bruit, l'habitacle 2 du compartiment 3.

La cloison 4 comporte un panneau porteur rigide central 20 horizontal. Le panneau rigide 20 doit être suffisamment résistant pour supporter un objet lourd posé par un utilisateur sur la cloison 4. Typiquement, le panneau rigide est en polymère. L'épaisseur du panneau 20 est comprise entre 2 et 5 millimètres.

Le panneau 20 est percé d'une pluralité de trous verticaux 28 débouchant dans la face supérieure et la face inférieure du panneau.

Dans l'exemple représenté, les trous 28 sont formés par des alésages cylindriques ménagés dans la cloison 4. Pour une efficacité optimale, le diamètre de l'alésage est compris sensiblement entre 3 et 7 millimètres.

Le contour de la section transversale des trous peut ne pas être circulaire, mais par exemple carrée ou rectangulaire, par exemple avec un congé dans les angles. L'aire de la section transversale de chaque trou, appelée aussi section de passage de chaque trou, est sensiblement comprise entre 7 et 40 millimètres carrés pour une efficacité optimale de la cloison selon l'invention.

La somme des sections de passage des trous 28 est comprise entre 5 pour cent et 15 pour cent de l'aire totale du panneau 20. En effet, afin que le panneau puisse vibrer, il est important que les trous ne représentent pas une proportion trop importante de son aire totale.

Dans l'exemple représenté, le panneau 20 est plan, la tablette est sensiblement horizontale. Dans le cas où la tablette serait galbée par exemple sur son pourtour, les trous 28 sont percés en priorité dans des régions planes du panneau.

La cloison 4 comporte une couche de revêtement supérieure 22 en matériau non tissé, au-dessus du panneau 20, côté habitacle 2. La matière de la couche 22 doit respecter des critères d'aspect et doit pouvoir être nettoyée, en particulier avec un aspirateur. L'épaisseur de la couche supérieure 22 est comprise entre 1 et 4 millimètres. La couche supérieure 22 est en un matériau apte à atténuer par absorption l'amplitude des ondes sonores, en particulier en moyennes et hautes fréquences.

La cloison comporte une couche de revêtement inférieure 24 en matériau non tissé, côté compartiment 3. La couche inférieure est en feutre, donc avec des fibres non ordonnées. Dans un mode de réalisation, le feutre est combiné à une résine, la couche inférieure étant alors composite. L'épaisseur de la couche inférieure 24 est comprise entre 5 et 20 millimètres. La couche inférieure 24 est en matériau apte à atténuer par absorption l'amplitude des ondes sonores, en particulier en moyennes et hautes fréquences.

La cloison comporte une couche intermédiaire 26 placée entre la face inférieure du panneau 20 et la couche inférieure 24. La couche intermédiaire est un film en matière plastique. Typiquement, le film est souple et l'épaisseur du film 26 est comprise entre 30 et 60 micromètres. Une épaisseur de film inférieure à 300 micromètres permet au film de répondre aux conditions requises de perméabilité exprimée ci-après.

Selon l'invention, au moins la couche supérieure 22 de revêtement est perméable à des premières ondes sonores dont la fréquence est comprise dans un premier intervalle de fréquences, à savoir l'intervalle correspondant aux basses fréquences. La perméabilité de la cloison 4 selon l'invention permet de déplacer le ventre d'ondes stationnaires dont la fréquence est comprise dans le premier intervalle. Le ventre des dites ondes stationnaires est déplacé de l'habitacle vers le compartiment à bagages, au bénéfice du confort acoustique des occupants pour le bruit correspondant aux dites ondes stationnaires.

Placé d'un côté du panneau 20, le film 26 est perméable aux premières ondes et imperméable à des secondes ondes sonores dont la fréquence est comprise dans un deuxième intervalle de fréquences supérieures à celles du premier intervalle, à savoir l'intervalle correspondant aux moyennes et hautes fréquences. Le film 26 se comporte comme un filtre coupant les secondes ondes sonores pour éviter de dégrader le confort acoustique dans l'habitacle à cause de bruit correspondant aux secondes ondes sonores. L'habitacle est isolé des deuxièmes ondes sonores présentes dans le compartiment à bagages, au bénéfice du confort acoustique des utilisateurs pour le bruit correspondant aux secondes ondes sonores.

De plus, une portion du film 26 s'étend en regard de l'embouchure inférieure de chaque trou 28 de manière à constituer, avec les couches de revêtement 22 et 24, une pluralité de résonateurs pour les deuxièmes ondes sonores. En effet, chaque logement délimité par l'alésage de chaque trou 28 forme une cavité de résonance fermée en haut par la couche supérieure 22 et en bas par le film 26 et la couche inférieure 24.

Chaque cavité individuelle de résonance se comporte comme une chemise cylindrique dans laquelle coulisse un piston avec amortissement du coulissement du piston par un ressort. L'alésage de chaque trou 28 symbolise la chemise. Le piston et le ressort symbolisent les couches d'habillage 22, 24 et le film 26. Chaque cavité de résonance ainsi modélisée possède une fréquence propre de résonance.

Dans les formules qui vont suivre, $d$ est le diamètre de la cavité, $m$ est la masse du piston, $k_c$ est la raideur due à la résistance de l'air fermé dans la cavité, $k_p$ est la raideur du piston, $c$ est la vitesse du son, $l$ est la profondeur de la cavité, $\rho_o$ est la densité de l'air, $E$ est le module élastique du matériau du piston, $\nu$ est le coefficient de poisson, $a$ est un coefficient qui représente la condition aux limites de la fermeture, $h$ est l'épaisseur du piston.

La première fréquence de résonance $f_o$ de chaque cavité fermée est calculée par la formule suivante :

$$f_o = \frac{1}{2\pi} \sqrt{\frac{k_c + k_p}{m}}$$

Dans cette formule, les paramètre $k_c$ et $k_p$ peuvent être estimées par la formule suivante :

$$k_c = \frac{\pi \rho_o c^2 d^2}{4l}$$

$$k_p = \alpha^4 \frac{\pi E h^3}{3d^2 (1 - \nu^2)}$$

A la fréquence de résonance, la vitesse relative des particules de l'air dans chaque trou 28 de la cloison 4 par rapport à ses fermetures est maximale. Ce mouvement relatif permet d'augmenter l'énergie des ondes sonores piégée dans les fibres du feutre 24 et du non tissé 26, les fibres étant mises en mouvement par le mouvement relatif des particules de l'air. Les couches de revêtement 22 et 24 voient leur capacité d'absorption multipliée par l'effet de résonance des résonateurs. En moyennes fréquences les résonateurs permettent de transformer l'énergie des ondes sonores pour dissiper cette énergie dans la cloison 4 d'autant que, pour les deuxièmes ondes sonores, le film 26 est excité. L'effet des résonateurs est bénéfique pour le confort acoustique global du véhicule.

L'amélioration de l'acoustique résultant de l'utilisation d'une cloison selon l'invention à l'intérieur d'un véhicule a été mesurée.

Lors d'une première série de mesures, l'amélioration de l'acoustique en comparant le niveau sonore d'un même véhicule tout d'abord équipé d'une tablette classique comportant un panneau central, une couche de revêtement supérieure et une couche de revêtement inférieure, puis équipé d'une tablette selon l'invention. Les mesures ont été effectuées avec diverses cloisons selon l'invention dont les trous 28 avaient un diamètre compris entre 4 et 6 millimètres.

Une diminution du niveau sonore comprise entre 4 et 8 décibels a été observée aux places arrières du véhicule quand il est équipé de telles cloisons selon l'invention, pour des ondes sonores dont la fréquence est comprise entre 50 et 200 Hertz, en excitant le train arrière. En roulage, une diminution du niveau sonore de 5 décibels a été observée dans le véhicule, aux places arrière, sur les pics de bruits entre 50 Hertz et 160 Hertz. En roulage, le niveau sonore n'est pas dégradé pour les ondes sonores dont la fréquence est supérieure à 500 Hertz. En roulage, dans une large plage de fréquences de 50 à 4000 Hertz, il y a une réduction moyenne de 2 décibels du niveau sonore global mesuré dans l'habitacle du véhicule.

Lors d'une deuxième série de mesures, l'amélioration de l'acoustique a été mesurée en comparant le niveau sonore d'un même véhicule tout d'abord équipé d'une tablette avec un panneau central percé de trous, une couche de revêtement supérieure et une couche de revêtement inférieure, mais sans film, puis équipé d'une tablette selon l'invention. Les mesures ont été effectuées avec diverses cloisons selon l'invention dont les trous 28 avaient un diamètre compris entre 4 et 6 millimètres.

Dans ces conditions, le niveau sonore est diminué de 5 décibels pour des ondes sonores dont la fréquence est comprise entre 200 et 1500 Hertz. Le niveau sonore est diminué de 10 à 20 décibels pour les ondes sonores dont la fréquence est comprise entre 1500 et 10000 Hertz. Le niveau sonore n'est pas dégradé pour les ondes basses fréquences.

Pour fabriquer la cloison selon l'invention, un demi-produit plan formant le panneau est découpé à la dimension souhaité. Le panneau est maintenu dans une presse dont un moule est percé de trous. Des poinçons mobiles sont actionnés par la presse pour le perçage du panneau, qui est ensuite évacué, au même titre que la matière découpée. Le panneau ajouré est ensuite thermoformé comporte des portions recourbées, puis la couche inférieure, le film et la couche inférieure sont rapportés par collage.

En variante non représentée, le film est placé sur la couche de revêtement associée au panneau, côté compartiment à bagages de la cloison.

**Revendications**

1. Cloison (4) de séparation de deux compartiments intérieurs (2, 3) d'un véhicule automobile (1) comportant un panneau rigide (20) qui est percé d'une pluralité de trous (28) débouchant dans chaque face et qui est revêtu, sur chaque face, d'au moins une couche de revêtement (22, 24) perméable à des premières ondes sonores dont la fréquence est comprise dans un premier intervalle de fréquences, **caractérisée en ce qu'**elle comporte d'un côté du panneau (20) un film (26) perméable aux premières ondes et imperméable à des secondes ondes sonores dont la fréquence est comprise dans un deuxième intervalle de fréquences supérieures à celles du premier intervalle.

2. Cloison selon la revendication précédente, **caractérisée en ce que** une portion du film (26) et des couches de revêtement (22, 24) s'étend en regard d'une embouchure de chaque trou (28) de manière à constituer une pluralité de résonateurs pour les deuxièmes ondes sonores.

3. Cloison selon l'une quelconque des revendications précédentes, **caractérisée en ce que** le film (26) est placé entre une face du panneau (20) et la couche de revêtement (22, 24) associée.

4. Cloison selon l'une quelconque des revendications précédentes, **caractérisée en ce que** l'épaisseur du film (26) est comprise entre 30 et 60 micromètres.

5. Cloison selon l'une quelconque des revendications précédentes, **caractérisée en ce que** la section de passage de chaque trou (28) est comprise entre 7 et 40 millimètres carrés.

6. Cloison selon l'une quelconque des revendications précédentes, **caractérisée en ce que** l'épaisseur du panneau (20) est comprise entre 2 et 5 millimètres.

7. Cloison selon l'une quelconque des revendications précédentes, **caractérisée en ce que** la somme des sections de passage des trous (28) est comprise entre 5 pour cent et 15 pour cent de l'aire totale du panneau (20).

8. Cloison selon l'une quelconque des revendications précédentes, **caractérisée en ce que** les trous (28) sont percés dans des régions planes du panneau (20).

9. Cloison selon l'une quelconque des revendications précédentes, **caractérisée en ce que** les couches de revêtement (22, 24) sont réalisées en un matériau non tissé.

10. Cloison selon l'une quelconque des revendications précédentes, **caractérisée en ce que** la couche de revêtement (24) côté film (26) est réalisée en un matériau comportant un feutre.

11. Véhicule comportant une cloison selon l'une quelconque des revendications précédentes, **caractérisée en ce que** la cloison (4) est une tablette sensiblement horizontale disposée entre l'habitacle (2) et le compartiment (3) à bagages du véhicule (1).

12. Véhicule selon la revendication précédente, **caractérisé en ce que** le film (26) est situé côté compartiment à bagages (3).

EP 1 493 623 A1

Fig. 1

**Office européen des brevets**

## RAPPORT DE RECHERCHE EUROPEENNE

Numéro de la demande

EP 04 29 1683

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | FR 1 444 097 A (RENAULT) 1 juillet 1966 (1966-07-01) * le document en entier * ----- | 1-12 | B60R5/04 B60R13/08 |
| Y | GB 1 579 897 A (BECKER AB WILHEIM) 26 novembre 1980 (1980-11-26) * page 1, ligne 1 - page 3, ligne 26; figures * ----- | 1-12 | |

**DOMAINES TECHNIQUES RECHERCHES (Int.Cl.7)**

B60R

Le présent rapport a été établi pour toutes les revendications

| Lieu de la recherche | Date d'achèvement de la recherche | Examinateur |
|---|---|---|
| Berlin | 18 août 2004 | David, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 1683

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-08-2004

| Document brevet cité au rapport de recherche | | Date de publication | Membre(s) de la famille de brevet(s) | | Date de publication |
|---|---|---|---|---|---|
| FR 1444097 | A | 01-07-1966 | DE | 1680841 B | 27-08-1970 |
| | | | GB | 1142624 A | 12-02-1969 |
| | | | OA | 1950 A | 04-02-1970 |
| | | | US | 3324968 A | 13-06-1967 |
| GB 1579897 | A | 26-11-1980 | SE | 402142 B | 19-06-1978 |
| | | | DE | 2724172 A1 | 15-12-1977 |
| | | | DK | 241177 A ,B, | 04-12-1977 |
| | | | FI | 771727 A ,B, | 04-12-1977 |
| | | | FR | 2353392 A1 | 30-12-1977 |
| | | | IT | 1084993 B | 28-05-1985 |
| | | | NO | 771856 A ,B, | 06-12-1977 |
| | | | SE | 7606268 A | 04-12-1977 |

EPO FORM P0460

Pour tout renseignement concernant cette annexe : voir Journal Officiel de l'Office européen des brevets, No.12/82